(19) **Europäisches Patentamt**
**European Patent Office**
**Office européen des brevets**

(11) **EP 4 603 462 A1**

(12) **EUROPEAN PATENT APPLICATION**
published in accordance with Art. 153(4) EPC

(43) Date of publication:
**20.08.2025 Bulletin 2025/34**

(21) Application number: **23877285.9**

(22) Date of filing: **10.10.2023**

(51) International Patent Classification (IPC):
*C03B 20/00* (2006.01)     *C03B 8/04* (2006.01)
*H05B 6/80* (2006.01)

(52) Cooperative Patent Classification (CPC):
**C03B 37/01453; C03B 19/106; C03B 19/1453;
C03B 20/00; H05B 6/80;** C03B 2201/12

(86) International application number:
**PCT/JP2023/036784**

(87) International publication number:
**WO 2024/080282 (18.04.2024 Gazette 2024/16)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.10.2022 JP 2022163737**

(71) Applicant: **SUMITOMO ELECTRIC INDUSTRIES,
LTD.**
**Osaka-shi, Osaka 541-0041 (JP)**

(72) Inventors:
• **ISHIKAWA Shinji**
  **Osaka-shi, Osaka 541-0041 (JP)**
• **HARUNA Tetsuya**
  **Osaka-shi, Osaka 541-0041 (JP)**
• **SATO Shin**
  **Osaka-shi, Osaka 541-0041 (JP)**
• **MORITA Keisei**
  **Osaka-shi, Osaka 541-0041 (JP)**

(74) Representative: **TBK**
**Bavariaring 4-6**
**80336 München (DE)**

(54) **SILICA GLASS BODY MANUFACTURING METHOD AND HEATING DEVICE**

(57)     A method for manufacturing a silica glass body includes preheating a porous silica glass body, and placing the preheated porous silica glass body in a resonator that resonates a microwave having a frequency band of 1 GHz to 30 GHz to heat the porous silica glass body with the microwave. At least a part of the porous silica glass body contains an additive other than silicon and oxygen. The porous silica glass body is preheated to a temperature equal to or higher than a glass transition temperature of the additive-added portion of the porous silica glass body in the preheating. The porous silica glass with the additive is heated with the microwave in the heating with the microwave.

**Fig.1**

**EP 4 603 462 A1**

## Description

### Technical Field

The present disclosure relates to a method for manufacturing a silica glass body, and a heating apparatus. The present application claims the priority based on Japanese Patent Application No. 2022-163737, filed on October 12, 2022, the entire contents of which are incorporated herein by reference.

### Background Art

Patent Literatures 1 and 2, and Non-Patent Literatures 1 and 2 disclose methods of heating a glass tube in a microwave resonator after preheating it with flame heating. Patent Literatures 3, 4, 5, and 6 disclose methods of heating a glass tube with a microwave after preheating it with microwave plasma. Patent Literatures 7 and 8 disclose heating a glass soot body or an optical fiber with a microwave.

### Citation List

### Patent Literature

[Patent Literature 1] JP S61-063535 A
[Patent Literature 2] JP S62-113732 A
[Patent Literature 3] JP H01-183432 A
[Patent Literature 4] JP H01-183436 A
[Patent Literature 5] JP H04-114926 A
[Patent Literature 6] JP 2004-043224 A
[Patent Literature 7] JP H01-183435 A
[Patent Literature 8] JP 2005-145735 A

### Non-Patent Literature

[Non-Patent Literature 1] YNGVE HASSLER et al., "A Homogeneous Heating Technique in Preform Manufacturing", Journal of Lightwave Technology, Vol. 4, No10, p1567-1570, 1986
[Non-Patent Literature 2] Y. HASSLER and L. JOHANSEN, "MICROWAVE HEATING OF FUSED QUARTZ TO HIGH TEMPERATURES IN THE FABRICATION PROCESS OF OPTICAL FIBERS", Material Research Soc. Symp. Proc. Vol.124, p273-278, 1988

### Summary of Invention

A method for manufacturing a silica glass body according to one embodiment of the present disclosure includes preheating a porous silica glass body, and placing the preheated porous silica glass body in a resonator that resonates a microwave having a frequency band of 1 GHz to 30 GHz to heat the porous silica glass body with the microwave. At least a part of the porous silica glass body contains an additive other than silicon and oxygen. The porous silica glass body is preheated to a temperature equal to or higher than a glass transition temperature of the additive-added portion of the porous silica glass body in the preheating. The porous silica glass with the additive is heated with the microwave in the heating with the microwave.

### Brief Description of Drawings

[FIG. 1] FIG. 1 is a schematic diagram showing an example of a heating apparatus for heating a porous silica glass body.
[FIG. 2] FIG. 2 is a schematic diagram showing another example of a heating apparatus for heating a porous silica glass body.

[FIG. 3] FIG. 3 is a schematic diagram showing an example of an apparatus for measuring absorption of a microwave in a porous silica glass body.

[FIG. 4] FIG. 4 is a graph showing the relationship of frequency with and without a glass sample in the measuring apparatus shown in FIG. 3.

[FIG. 5] FIG. 5 is a graph showing changes in microwave absorption for each amount of halogen element (fluorine) added to a silica glass body.

[FIG. 6] FIG. 6 is a graph showing changes in microwave absorption for each amount of oxide (germanium dioxide) added to a silica glass body.

[FIG. 7] FIG. 7 is an example showing changes in microwave absorption for each amount of alkali metal element (potassium) added to a silica glass body.

**Description of Embodiment**

[Problem to be Solved by Disclosure]

In the methods described in Patent Literature 1 and the like, microwave heating is performed after preheating the glass tube. However, in these methods, since the glass tube absorbs a microwave, it is necessary to heat the glass tube to about 1500°C during preheating. Thus, conventional methods require a lot of energy for heating, and there has been a desire to improve energy efficiency.

[Advantageous Effect of Disclosure]

According to the present disclosure, it is possible to reduce heating energy when manufacturing a silica glass body.

[Description of Embodiment of Disclosure]

First, details of embodiments of the present disclosure will be listed and described.

[1] A method for manufacturing a silica glass body according to one embodiment of the present disclosure includes preheating a porous silica glass body, and placing the preheated porous silica glass body in a resonator that resonates a microwave having a frequency band of 1 GHz to 30 GHz to heat the porous silica glass body with the microwave. At least a part of the porous silica glass body contains an additive other than silicon and oxygen. The porous silica glass body is preheated to a temperature equal to or higher than a glass transition temperature of the additive-added portion of the porous silica glass body in the preheating. The porous silica glass with the additive is heated with the microwave in the heating with the microwave.

According to the finding of the inventors, it has been found that by adding an additive to a porous silica glass body, a temperature at which the porous silica glass body begins to increase its degree of microwave absorption changes and decreases. This is considered to be because adding an additive other than silicon and oxygen (various elements, etc.) lowers viscosity of a silica glass, making it easier to flow, and thereby accelerating the absorption of the microwave. Additionally, the effect of absorbing the microwave due to polarization caused by the combination of different elements or silicon (Si) bond defects (SiO:, Si:, etc.) is also considered to be a cause. Therefore, in this method for manufacturing a silica glass body, the porous silica glass body is preheated, and the porous silica glass body with the additive other than silicon and oxygen is heated with the microwave. As a result, even if the preheating temperature of the porous silica glass is lowered compared to the conventional method, it can still be heated with the microwave, thereby reducing heating energy. Furthermore, in this method for manufacturing a silica glass body, since the porous silica glass is heated by self-heating due to microwave absorption, it is not necessary to heat the entire furnace. This allows for further reduction of heating energy and improvement of energy efficiency. Even if only a part of the porous silica glass is added with an additive, the heating region expands from the added portion due to heat transfer within the silica glass body, so it is possible to heat the entire porous silica glass body in the same manner as if the entire porous silica glass body were added with an additive.

[2] In the method for manufacturing a silica glass body described in [1], the additive may be a halogen element. In this case, the addition of the halogen element causes the Si-O glass network to be cut, resulting in a decrease in viscosity of the glass. This results in a decrease effect in the microwave absorption start temperature due to the viscous flow of the silica glass. Furthermore, the spread of far-infrared absorption of the Si-X (X: halogen (F, Cl, Br, I)) bond may also contribute to the absorption characteristics in the microwave region.

[3] In the method for manufacturing a silica glass body described in [2], the halogen element may be added to the porous silica glass body as an additive in the preheating. In this case, since the halogen element is added to the porous silica glass body using the heat during preheating, it is not necessary to add the halogen to the silica glass porous body in advance, and the glass manufacturing process can be made more efficient by providing the microwave absorption effect within the glass heating process.

[4] In the method for manufacturing a silica glass body described in [2] or [3], the halogen element may be added to the porous silica glass body as an additive by supplying a halogen compound gas into the core tube including the resonator in the preheating and the heating with microwave. In this case, the method of adding the halogen to the porous silica glass body can be simplified by using the compound gas.

[5] In the method for manufacturing a silica glass body described in [1], the additive may be an oxide of an element selected from the group consisting of germanium, aluminum, boron, phosphorus, and titanium. This lowers the viscosity of the glass. Additionally, the effect of lowering the microwave absorption start temperature due to the viscous flow of the silica glass occurs. Furthermore, these oxides are likely to have bond defects, and the spread of far-infrared absorption due to the polarization of the defects may also contribute to the absorption characteristics in the microwave region.

[6] In the method for manufacturing a silica glass body described in [1], the oxide of an element selected from the group consisting of germanium, aluminum, boron, phosphorus, and titanium, and the halogen element may be added to the porous silica glass body as additives in the preheating. In this case, the effect of microwave absorption due to the halogen element and the oxide overlaps, making it possible to further lower the microwave absorption start temperature.

[7] In the method for manufacturing a silica glass body described in [1], the additive may be at least one alkali element selected from alkali metals and alkaline earth metals. In this case, the addition of the alkali element lowers the viscosity, and the alkali element can contribute to the polarization in the microwave band by becoming isolated ions in the glass.

[8] In the method for manufacturing a silica glass body described in [1], at least one halogen element and at least one alkali element selected from alkali metals and alkaline earth metals may be added to the porous silica glass body as additives in the preheating. In this case, the effect of microwave absorption due to the halogen element and the alkali element overlaps, making it possible to further lower the microwave absorption start temperature.

[9] In the method for manufacturing a silica glass body described in any one of [1] to [8], the glass transition temperature may be 700°C or higher and less than 1100°C. In this case, the preheating temperature can be reduced compared to the conventional method, and the heating energy can be more reliably reduced.

[10] The method for manufacturing a silica glass body described in any one of [1] to [9] may further include adding the additive to the porous silica glass body before the preheating. In this case, the addition of the additive to the porous silica glass can be more reliably performed.

[11] A heating apparatus according to one embodiment of the present disclosure is a heating apparatus used in the method for manufacturing a silica glass body described in any one of [1] to [10]. This heating apparatus includes a core tube capable of accommodating a porous silica glass body therein, a preheating mechanism configured to preheat the porous silica glass body, and a resonant heating mechanism configured to heat the porous silica glass body preheated by the resonating microwaves, by resonating a microwave. According to this apparatus, as described above, the heating energy can be reduced.

[12] The heating apparatus described in [11] may further include a gas introduction part capable of introducing gas containing an additive into the core tube. In this case, the addition of additive to the porous silica glass can be more reliably performed within the heating apparatus.

[13] In the heating apparatus described in [11] or [12], the preheating mechanism and the resonant heating mechanism may be sequentially arranged along the direction in which the porous silica glass body moves in the core tube. This allows the preheated porous silica glass body to smoothly transition to microwave heating.

[14] In the heating apparatus described in any one of [11] to [13], the preheating mechanism may be configured to heat the porous silica glass body to a temperature of 700°C or higher and less than 1100°C. In this case, the preheating temperature by the preheating mechanism can be reduced compared to the conventional method, and the heating energy can be more reliably reduced. Additionally, the range of selection for heating methods and heater materials used for electric resistance heating can be expanded, allowing for more economical options.

[Detailed Description of Embodiment of Disclosure]

Specific examples of a method for manufacturing a silica glass body and a heating apparatus according to embodiments of the present disclosure will be described below with reference to the drawings. In the following description, the same reference signs will be used for the same elements or the elements having same functions, and redundant descriptions are omitted. The present invention is not limited to these examples and is indicated by claims, and it is intended to include all changes within the meaning and the scope equivalent to the claims.

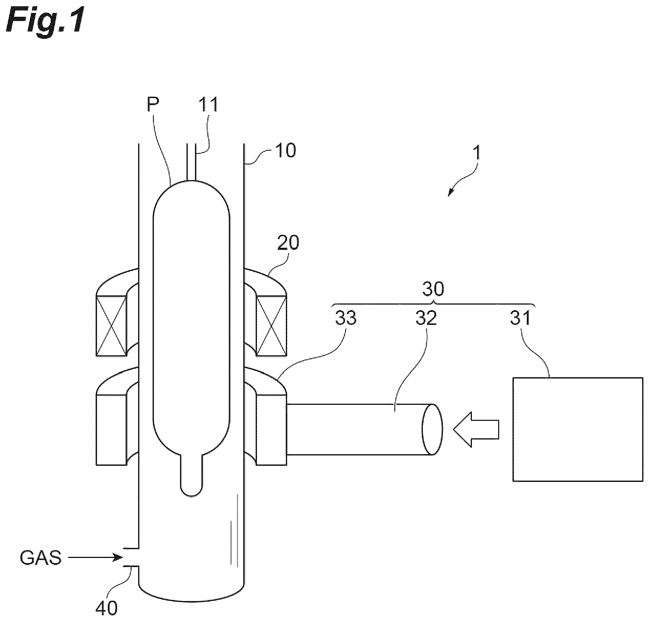

First, a heating apparatus used in manufacturing of a silica glass body will be described with reference to FIG. 1.

FIG. 1 is a schematic diagram showing an example of a heating apparatus for heating a porous silica glass body. As shown in FIG. 1, the heating apparatus 1 includes a core tube 10, a resistance heating heater 20 (preheating mechanism), a resonant heating mechanism 30, and a gas introduction part 40.

The core tube 10 is a member for accommodating and heating the porous silica glass body P inside, and for example, has a cylindrical shape. The core tube 10 may be made of high-purity alumina ($Al_2O_3$) or low-OH silica glass from the viewpoint of preventing deformation during heating and from the viewpoint of microwave transmission. The heating apparatus 1 is provided with a rod (not shown). The porous silica glass body P supported by the seed rod 11 is connected to the rod and inserted into the core tube 10 from the above of the core tube 10. The rod may be movable along the longitudinal direction of the core tube 10 and may rotate around the central axis. The porous silica glass body P held by the rod may move from top to bottom after being heated by the resistance heating heater 20 and then heated by the resonant heating mechanism 30, or it may reciprocate along the longitudinal direction of the core tube 10. The core tube 10 is made airtight because gas is introduced from the gas introduction part 40.

The resistance heating heater 20 is a preheating mechanism for preheating the porous silica glass body P. The resistance heating heater 20 is arranged to surround the outer circumference of the core tube 10 and is arranged upstream of the resonant heating mechanism 30 that performs the main heating (above the resonant heating mechanism 30 in FIG. 1). In the method for manufacturing a silica glass body according to the present embodiment, the resistance heating heater 20 can reduces the heating temperature compared to the conventional temperature (e.g., 1500°C), and for example, may be set to heat the porous silica glass body P to a temperature of 700°C or higher and less than 1100°C. This set heating temperature is a temperature equal to or higher than the glass transition temperature Tg of the additive-added portion of the porous silica glass body P, where an additive (e.g., fluorine as a halogen element) is added, and is adjusted according to the type and amount of the additive. Various conventional resistance heaters can be used as the resistance heating heater 20, so detailed descriptions are omitted.

The resonant heating mechanism 30 includes a microwave generator 31, a waveguide 32, and a resonator 33. The microwave generator 31 includes a magnetron and is an apparatus that generates microwaves in the frequency band of 1 GHz to 30 GHz. The microwave generator 31 is configured to generate microwaves in the 2.45 GHz band, 10 GHz band, or 24 GHz band, for example. The microwave generator 31 is connected to one end of the waveguide 32 and introduces microwaves of a predetermined frequency into the waveguide 32. The waveguide 32 is made of a conductive material such as stainless steel (SUS) or copper. The other end of the waveguide 32 is connected to the resonator 33. The microwaves generated by the microwave generator 31 are introduced into the resonator 33 through the waveguide 32.

The resonator 33 of the resonant heating mechanism 30 has a cylindrical shape with a cavity. The resonator 33 is arranged to surround the outer circumference of the core tube 10 and is arranged downstream of the resistance heating heater 20 that performs the preheating (below the resistance heating heater 20 in FIG. 1). The resonator 33 may be made of a heat-resistant metal or a conductive carbon material. The resonator 33 may be configured to be resistant to structural changes due to high-temperature radiation from the heated object (e.g., water-cooled). The resonator 33 confines the introduced microwaves within the resonator 33 and heats the porous silica glass body P located inside the resonator 33. The structure of the resonator 33 can be adjusted to match the power distribution of the microwaves to the porous silica glass body P, which is the target of heat treatment. The distribution within the resonator 33 may be adjusted to have a cavity structure such that the power peak is at the central part (LP0n (HE1n) mode) or the power peak is at the peripheral part (LPm1 (TEm+11, etc.) mode). The resonator 33 may be adjusted to have multiple modes mixed. The resonator 33 may be configured to reduce the power of microwaves within the core tube 10. This can be expected to have the effect of suppressing the heating of the core tube 10.

The gas introduction part 40 is a part for introducing various gases into the core tube 10. From the gas introduction part, inert gases (e.g., nitrogen ($N_2$) or helium (He)), halogen-based gases (gases containing halogen elements), gases containing oxide compounds, vapors containing alkali metals or alkaline earth metals, etc., are introduced into the core tube 10. The additives contained in the introduced gases, etc., are added to the porous silica glass body P. The gas introduced into the core tube 10 from the gas introduction part 40 is discharged outside the core tube 10 by an exhaust system (not shown) after the addition to the porous silica glass body P is completed

Examples of halogen elements contained in halogen-based gases include fluorine (F), chlorine (Cl), bromine (Br), and iodine (I). Among these, particularly fluorine or chlorine is added. This causes the Si-O glass network to be cut, thereby lowering the viscosity of the glass. Examples of such halogen-based gases include chlorine gas ($Cl_2$), silicon tetrachloride gas ($SiCl_4$), silicon tetrafluoride gas ($SiF_4$), and carbon tetrafluoride gas ($CF_4$).

Examples of oxide compounds contained in oxide compound gases include germanium dioxide ($GeO_2$), boron oxide ($B_2O_3$), aluminum oxide ($Al_2O_3$), and phosphorus pentoxide ($P_2O_5$). Among these, particularly $GeO_2$ is added. This is expected to have a microwave absorption effect due to oxygen deficiency in $GeO_2$.

Examples of alkali metals include sodium (Na), potassium (K), rubidium (Rb), and cesium (Cs). Examples of alkaline earth metals include magnesium (Mg), calcium (Ca), strontium (Sr), and barium (Ba). It is preferable to use alkali metals among alkaline metals and alkaline earth metals. When alkali metals are used, a significant decrease in viscosity is expected, and even in the low concentration range of less than 1 mol%, a decrease in the microwave absorption start temperature due to the decrease in viscosity is expected.

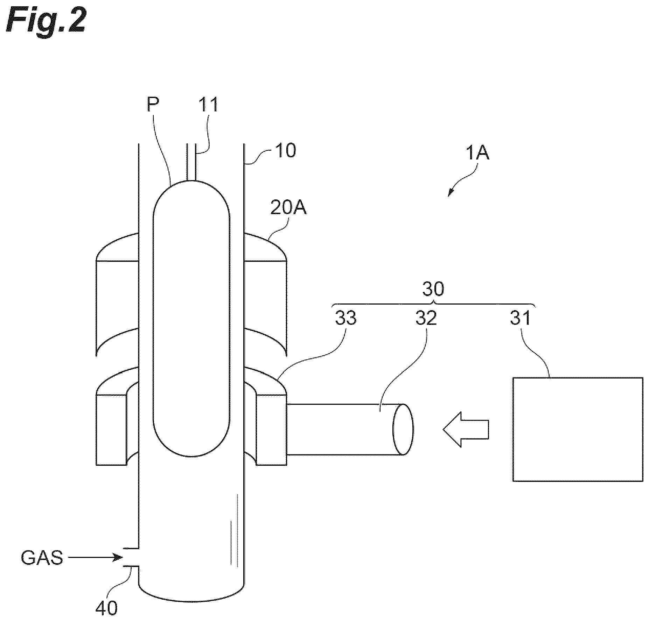

Here, a modified example of the heating apparatus 1 will be described with reference to FIG. 2. FIG. 2 is a schematic diagram showing another example of a heating apparatus for heating a porous silica glass body. As shown in FIG. 2, the heating apparatus 1A includes the core tube 10, an infrared heater 20A (preheating mechanism), the resonant heating mechanism 30, and the gas introduction part 40. The heating apparatus 1A according to the modified example has the same configuration as the heating apparatus 1 shown in FIG. 1, except that the preheating mechanism is an infrared heater that heats by irradiating infrared rays. The method for manufacturing a silica glass body according to the present embodiment can also be performed using such a heating apparatus 1A. Note that the preheating mechanism used in the heating apparatuses 1 and 1A is not limited to the above-mentioned resistance heating heater 20 or infrared heater 20A, and an induction resistance furnace or a movable microwave absorbing heating element (e.g., Si/SiC resistor) may also be used. These can be used for preheating.

Next, a method for manufacturing a silica glass body using the above-described heating apparatus 1 will be described. The same applies when using the heating apparatus 1A. The method for manufacturing a silica glass body according to the present embodiment includes the following steps (a), (b), and (c):

(a) Step for preparing a porous silica glass body P
(b) Step for preheating the porous silica glass body P
(c) Step for mainly heating the porous silica glass body P with microwaves.

[Step (a)]

In the step (a) of preparing a porous silica glass body P, for example, a porous silica glass body P is prepared by a known method such as the Vapor-phase Axial Deposition (VAD) method or the Outside Vapor Deposition (OVD) method. The porous silica glass body P is a structure in which glass particles with a particle size of 0.1 $\mu$m to 1 $\mu$m generated by the flame hydrolysis reaction or oxidation reaction of a silicon compound gas ($SiCl_4$, siloxane, etc.) are deposited on a predetermined target, and is generally also called a soot body. In the step (a) of preparing a porous silica glass body P, additives other than silicon and oxygen (e.g., fluorine as a halogen element, or germanium oxide or phosphorus pentoxide as an oxide other than silica) may be added to the porous silica glass body or a part thereof, as described later. The method of adding additives at the stage of preparing the porous silica glass body P can use a conventional method of mixing a compound gas with a silica glass raw material gas during the synthesis of the porous silica glass body, so detailed descriptions are omitted.

[Step (b)]

In the step (b) of preheating the porous silica glass body P, first, the porous silica glass body P formed on the lower part of the seed rod 11 prepared in step (a) is attached to the rod of the heating apparatus 1 shown in FIG. 1 and placed inside the core tube 10. Next, while introducing a predetermined gas from the gas introduction part 40, the porous silica glass body P placed inside the core tube 10 is heated to a predetermined temperature by the resistance heating heater 20. The temperature here refers to the surface temperature of the porous silica glass body P. The introduced gas may be an inert gas (e.g., nitrogen ($N_2$) or helium (He)), a halogen-based gas (gas containing halogen elements), a gas containing oxide compounds, or vapor containing alkali metals or alkaline earth metals, and the inert gas may contain halogen-based gas, gas containing oxide compounds, or vapor of alkali metals, and two or more gases may be included. As an example, preheating may be performed in an atmosphere where a nitrogen gas containing a predetermined amount of $SiCl_4$ or $SiF_4$ (a type of halogen-based gas) is introduced into the core tube 10 from the gas introduction part 40. By heating while introducing a gas containing additives in this way, predetermined additives (e.g., chlorine, fluorine, germanium dioxide, or potassium) are added to the porous silica glass body P. The temperature during preheating in step (b) is, for example, set to 700°C or higher and less than 1100°C, which is lower than the conventional heating temperature of 1500°C. This heating temperature is a temperature equal to or higher than the glass transition temperature Tg of the additive-added portion (the whole or part of the porous silica glass body P) where additives (e.g., chlorine or fluorine as halogen elements) are added to the porous silica glass body P. The heating temperature is adjusted according to the type and amount of the additive. Details of the additives will be described later.

[Step (c)]

In the step (c) of main heating the porous silica glass body P with microwaves, the porous silica glass body P with predetermined additives added is heated with microwaves using the resonant heating mechanism 30, while remaining the porous silica glass body P being heated by the preheating. In the porous silica glass body P with additives added in this way, as described later, the viscosity is lowered, making it easier to flow, and consequently, even at a lower temperature of the glass body than conventional, the absorption of microwaves is accelerated. In step (c), the microwaves used in the resonant heating mechanism 30 are microwaves having the frequency band of 1 GHz to 30 GHz, for example, microwaves in the 2.45 GHz band, 10 GHz band, or 24 GHz band. The maximum output of the microwaves in the resonant heating mechanism 30 is, for example, 1 kW to 30 kW. As an example, the maximum output of the microwaves is 10 kW. Specifically, in step (c), the porous silica glass body P with predetermined additives added and preheated is placed in an atmosphere filled with helium gas (100%) and microwaves with a maximum output of 10 kW and a frequency of 2.45 GHz are introduced into the resonator 33 from the microwave generator 31. The output of the microwaves is adjusted while monitoring the surface temperature of the porous silica glass body P with a thermometer (not shown). When the surface temperature of the porous silica glass body P reaches 1450°C, the porous silica glass body P is moved (e.g. lowered in FIG. 1) at a predetermined speed to make it transparent glass. Thus, a silica glass body is manufactured.

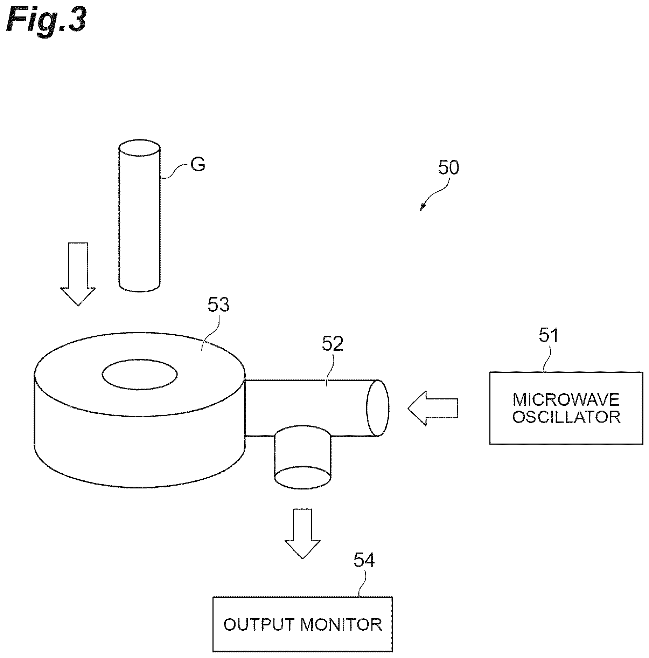

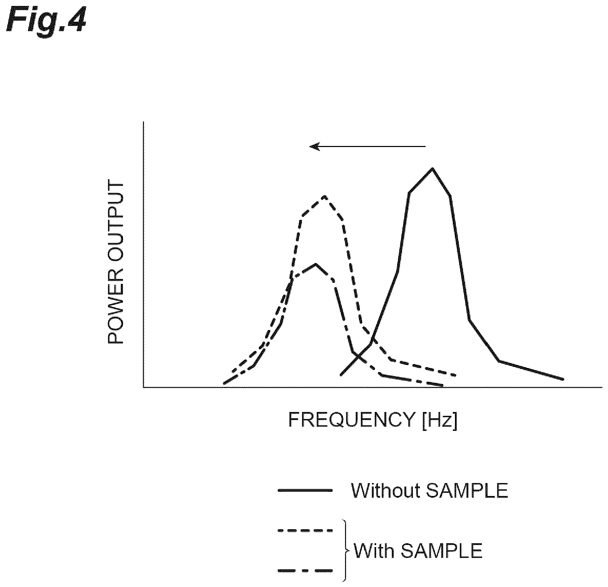

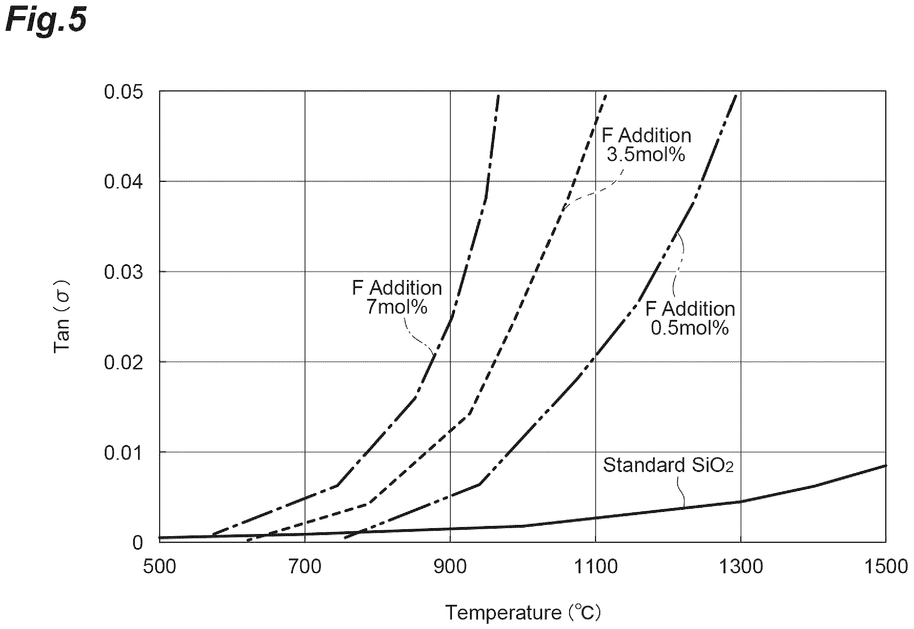

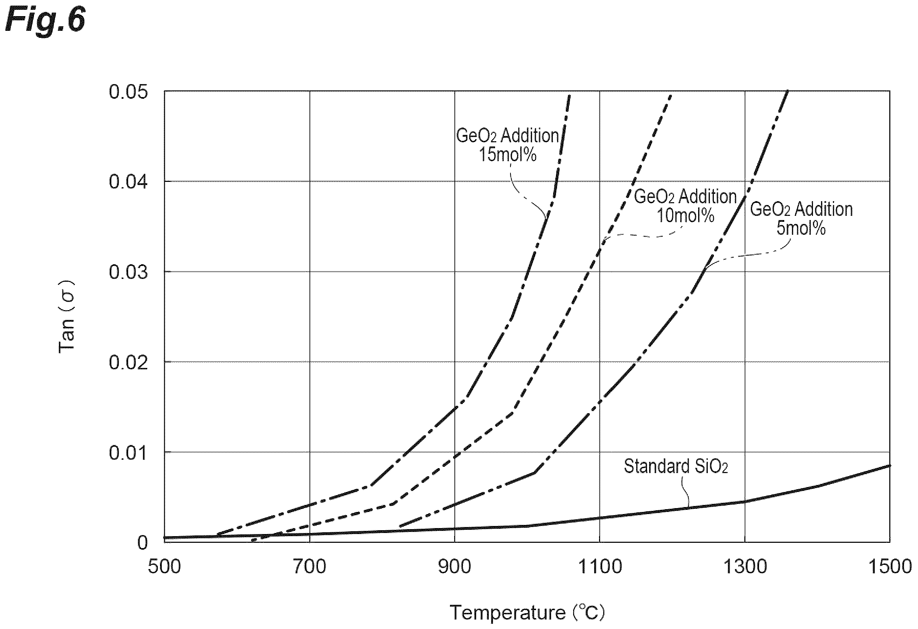

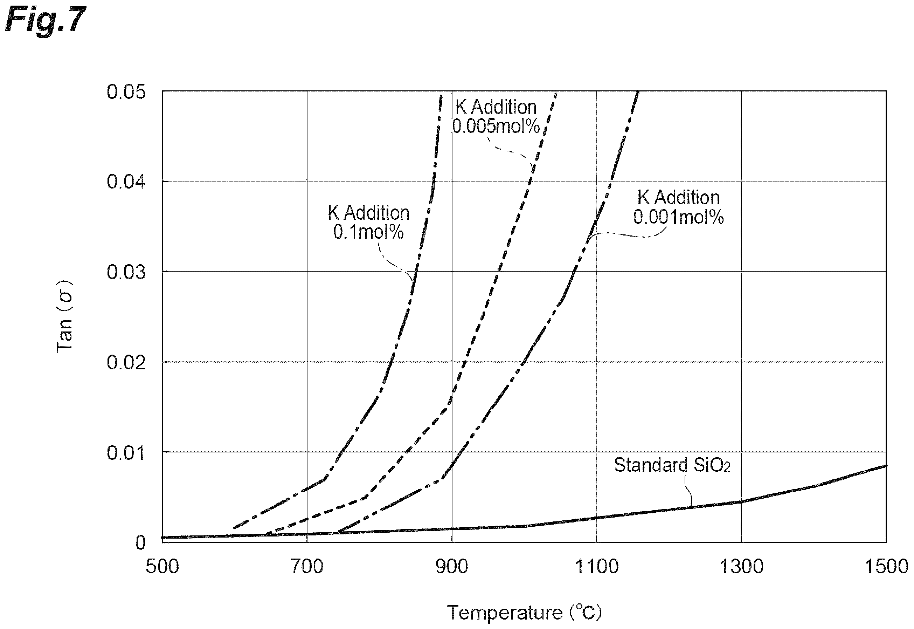

Here, the reason why the preheating temperature in step (b) before microwave heating (main heating) in step (c) can be lowered by adding halogen elements, oxide compounds, alkali metals, alkaline earth metals, etc., to the porous silica glass body P in step (b) or step (a) will be explained with reference to the following formula (1) and FIGS. 3 to 7. FIG. 3 is a schematic diagram showing an example of an apparatus for measuring the absorption of microwaves in a porous silica glass body. FIG. 4 is a graph showing the relationship of frequency with and without a glass sample in the measuring apparatus shown in FIG. 3. FIG. 5 is a graph showing changes in microwave absorption for each amount of halogen element (fluorine) added to a silica glass body. FIG. 6 is a graph showing changes in microwave absorption for each amount of oxide (germanium dioxide) added to a silica glass body. FIG. 7 is an example showing changes in microwave absorption for each amount of alkali metal element (potassium) added to a silica glass body.

Heating by microwaves is a method in which heating is performed by the absorption of microwaves in the microwave band due to the electrodes or flow of the material. The response of electromagnetic waves and materials can be indicated by the propagation speed and absorption coefficient at a given frequency in the material. The former propagation speed is indicated by the relative permittivity $\varepsilon'$, and the latter absorption coefficient is indicated by the relative dielectric loss $\varepsilon''$. The loss index is generally indicated by the dielectric tangent $\tan \sigma \approx \varepsilon''/\varepsilon'$, which indicates the response delay of electromagnetic waves.

The microwave energy absorption rate in a material is indicated, for example, by the following formula (1):

$$ P = \pi f \varepsilon \tan \delta \int E^2 \, dv \quad \cdot \cdot \cdot \, (1) $$

where P: absorbed energy, f: frequency, $\varepsilon$: relative permittivity, tan $\sigma$: dielectric tangent, E: electric field strength.

From the above formula (1), since the absorption in the material is proportional to the frequency and the dielectric tangent, a method of increasing tan $\sigma$ and frequency is effective for efficient microwave absorption. However, silica glass has a tan $\sigma$ of about $1 \times 10^{-4}$ in the microwave band of 0.1 GHz to 30 GHz in the normal temperature range. Therefore, silica glass could not be efficiently heated by microwaves. To address this low absorption efficiency issue, for example, Patent Literature 1 and the like realize heating by microwaves by applying preheating to the microwave heating of silica glass. However, in this conventional method, it was necessary to heat the glass body to about 1500°C as preheating to cause microwave absorption.

In contrast, according to the inventors, when the temperature dependence of microwave band absorption of glass G was measured using the test device 50 shown in FIG. 3, it was found that the temperature range at which microwave absorption begins to increase changes depending on the composition of the additives. The test device 50 includes a microwave oscillator 51, a waveguide 52, a resonator 53, and an output monitor 54, which can monitor the frequency dependence of the resonator output. FIG. 4 shows the change in resonant frequency when a glass G sample is inserted into the test device 50 and when no glass G is inserted.

The changes due to the types of elements added in this test are outlined below. In this test, the relative permittivity ($\varepsilon'$) was calculated from the change in resonant frequency when a rod-shaped sample (glass G) heated to a predetermined temperature was inserted into the cavity resonator 53, and the relative dielectric loss ($\varepsilon''$) was calculated from the change in peak value. The dielectric tangent (tan($\sigma$) = $\varepsilon''/\varepsilon'$) was derived from the relative permittivity ($\varepsilon'$) and the relative dielectric loss ($\varepsilon''$). Note that this value is not a quantitative value but a relative value compared to a reference sample (low-OH silica glass). The results are developed mainly on the temperature characteristics of tan($\sigma$).

*(0) Reference Sample: Low-OH (less than 50 ppm) silica glass (impurity elements other than OH are below the detection limit of 10 ppm)*

This reference sample was heated to around 1300°C, and tan($\sigma$) was calculated. As shown in FIGS. 5 to 7, the calculated tan($\sigma$) was less than 0.01 even at around 1300°C.

*(1) Sample with Halogen Element Added: Silica glass with fluorine added to the above reference sample*

As shown in FIG. 5, in this sample, the amount of fluorine added was changed to 0.5 mol%, 3.5 mol%, and 7 mol%, and each sample was heated to around 1300°C, and tan($\sigma$) was calculated for each amount. The calculated tan($\sigma$) began to increase to 0.01 or more in the range of 800°C to 1000°C. It is assumed that tan($\sigma$) also begins to increase to 0.01 or more in the range of 800°C to 1000°C for other halogen elements (e.g., chlorine).

*(2) Sample with Oxide Added: Silica glass with germanium dioxide (GeO$_2$) added to the above reference sample*

As shown in FIG. 6, in this sample, the amount of germanium dioxide added was changed to 5 mol%, 10 mol%, and 15 mol%, and each sample was heated to around 1300°C, and tan($\sigma$) was calculated for each amount. The calculated tan($\sigma$) began to increase to 0.01 or more in the range of 800°C to 1000°C. It is assumed that tan($\sigma$) also begins to increase to 0.01 or more in the range of 800°C to 1000°C for other oxides (e.g., $B_2O_3$, $Al_2O_3$, $P_2O_5$, etc.).

*(3) Sample with Alkali Metal Added: Silica glass with potassium added to the above reference sample*

As shown in FIG. 7, in this sample, the amount of potassium added was changed to 0.001 mol%, 0.005 mol%, and 0.1 mol%, and each sample was heated to around 1300°C, and tan($\sigma$) was calculated for each amount. The calculated tan($\sigma$) began to increase to 0.01 or more in the range of 700°C to 900°C. It is assumed that tan($\sigma$) also begins to increase to 0.01 or more in the range of 700°C to 900°C for other alkali metals (e.g., Na, Rb, Cs) or alkaline earth metals (Mg, Ca, Sr, Ba).

From the above experimental results, it was confirmed that additives other than SiO$_2$ components in silica glass have the effect of shifting the temperature dependence of microwave absorption to the lower temperature side, although the effect varies. This indicates that it is possible to lower the microwave absorption temperature by introducing additives into the glass. In other words, it was found that the preheating temperature in the preheating step (step (b)) before microwave heating (main heating) can be lowered compared to the conventional method. Moreover, even with such low-temperature preheating, self-heating due to microwave absorption occurs, and it was found that the porous silica glass body can be made transparent glass without heating the entire furnace, significantly reducing heating energy.

As described above, according to the findings of the inventors, it has been found that by adding additives to the porous silica glass body P, the temperature at which the porous silica glass body P begins to increase its degree of microwave absorption decreases. This is considered to be because adding additives other than silicon (Si) and oxygen (O) (various elements, etc.) lowers the viscosity of the silica glass, making it easier to flow, and thereby accelerating the absorption of microwaves. Additionally, the effect of absorbing microwaves due to polarization caused by the combination of different elements or silicon (Si) bond defects (SiO:, Si:, etc.) is also considered to be a cause. In the method for manufacturing a silica glass body according to the present embodiment, the porous silica glass body P is preheated, and the porous silica glass body P with additives other than silicon and oxygen is heated with microwaves. As a result, even if the preheating temperature of the porous silica glass is significantly lowered compared to the conventional method (e.g., about 1500°C), it can still be heated with microwaves, thereby reducing the heating energy. Moreover, in this method for manufacturing a silica glass body, since the porous silica glass body P is heated by self-heating due to microwave absorption, it is not necessary to heat the entire furnace. This allows for further reduction of heating energy and significant improvement of energy efficiency. Even if only a part of the porous silica glass is added with additives, the heating region expands from the added portion due to heat transfer within the silica glass body, so it is possible to heat the entire porous silica glass body in the same manner as if the entire porous silica glass body were added with additives.

In the method for manufacturing a silica glass body according to the present embodiment, the additive may be a halogen element. In this case, the addition of the halogen element causes the Si-O glass network to be cut, resulting in a decrease in the viscosity of the glass. This results in a decrease in the microwave absorption start temperature due to the viscous flow of the silica glass. Furthermore, the spread of far-infrared absorption of the Si-X (X: halogen (F, Cl, Br, I)) bond may also contribute to the absorption characteristics in the microwave region.

In the method for manufacturing a silica glass body according to the present embodiment, the halogen element may be added to the porous silica glass body P as an additive in the preheating step (b). In this case, since the halogen element is added to the porous silica glass body P using the heat during preheating, it is not necessary to add the halogen to the silica glass porous body in advance, and the glass manufacturing process can be made more efficient by providing the microwave absorption effect within the glass heating process.

In the method for manufacturing a silica glass body according to the present embodiment, the halogen element may be added to the porous silica glass body P as an additive by supplying a halogen compound gas into the core tube 10 in the preheating step (b) and the heating with microwave step (c). In this case, the method of adding the halogen to the porous silica glass body can be simplified by using the compound gas.

In the method for manufacturing a silica glass body according to the present embodiment, the additive may be an oxide of an element selected from the group consisting of germanium, aluminum, boron, phosphorus, and titanium. This lowers the viscosity of the glass. Additionally, the effect of lowering the microwave absorption start temperature due to the viscous flow of the silica glass occurs. Furthermore, these oxides are likely to have bond defects, and the spread of far-infrared absorption due to the polarization of the defects may also contribute to the absorption characteristics in the microwave region.

In the method for manufacturing a silica glass body according to the present embodiment, the oxide of an element selected from the group consisting of germanium, aluminum, boron, phosphorus, and titanium, and the halogen element may be added to the porous silica glass body as additives in the preheating step (b). In this case, the effect of microwave absorption due to the halogen element and the oxide overlaps, making it possible to further lower the microwave absorption start temperature.

In the method for manufacturing a silica glass body according to the present embodiment, the additive may be at least one alkali element selected from alkali metals and alkaline earth metals. In this case, the addition of the alkali element lowers the viscosity, and the alkali element can contribute to the polarization in the microwave band by becoming isolated ions in the glass.

In the method for manufacturing a silica glass body according to the present embodiment, at least one halogen element and at least one alkali element selected from alkali metals and alkaline earth metals may be added to the porous silica glass body as additives in the preheating step (b). In this case, the effect of microwave absorption due to the halogen element and the alkali element overlaps, making it possible to further lower the microwave absorption start temperature.

In the method for manufacturing a silica glass body according to the present embodiment, the glass transition temperature may be 700°C or higher and less than 1100°C. In this case, the preheating temperature can be reduced compared to the conventional method, and the heating energy can be more reliably reduced.

The method for manufacturing a silica glass body according to the present embodiment may further include a step of adding the additive to the porous silica glass body before the preheating step. In this case, the addition of the additive to the porous silica glass can be more reliably performed.

The heating apparatuses 1 and 1A according to the present embodiment are heating apparatuses used in the above-described method for manufacturing a silica glass body. The heating apparatuses 1 and 1A each include a core tube 10 capable of accommodating a porous silica glass body P, a preheating mechanism (resistance heating heater 20, infrared heater 20A) configured to preheat the porous silica glass body P, and a resonant heating mechanism 30 configured to heat the porous silica glass body preheated by the preheating mechanism, by resonating microwaves. According to these apparatuses, as described above, the heating energy can be reduced.

The heating apparatuses 1 and 1A according to the present embodiment further include a gas introduction part 40 capable of introducing gas containing additives into the core tube 10. In this case, the addition of additives to the porous silica glass can be more reliably performed within the heating apparatuses 1 and 1A.

In the heating apparatuses 1 and 1A according to the present embodiment, the preheating mechanism and the resonant heating mechanism 30 are sequentially arranged along the direction in which the porous silica glass body moves in the core tube. This allows the preheated porous silica glass body P to smoothly transition to microwave heating.

In the heating apparatuses 1 and 1A according to the present embodiment, the preheating mechanism may be configured to heat the porous silica glass body to a temperature of 700°C or higher and less than 1100°C. In this case, the heating temperature by the preheating mechanism can be reduced compared to the conventional method, and the heating energy can be more reliably reduced. Additionally, the range of selection for heating methods and heater materials used for electric resistance heating can be expanded, allowing for more economical options.

**Examples**

The present disclosure will be further described in detail with reference to examples, but the present invention is not limited to the following examples.

[Experimental Example 1]

As Experimental Example 1, first, as shown in the above-described step (a), a porous silica glass body made of silica glass was produced by the VAD method. The produced porous silica glass body had an outer diameter of 180 mm and a relative density of 0.15 compared to transparent glass.

Next, the heating apparatus 1 shown in FIG. 1 was prepared, and the produced porous silica glass body was accommodated in the core tube 10 as shown in the above-described step (b). Then, the resistance heating heater 20 was heated to preheat the porous silica glass body to 950°C. During this preheating, a gas containing 2 vol% $SiCl_4$ mixed in a nitrogen atmosphere was introduced from the gas introduction part 40, and chlorine was added to the entire porous silica glass body P. The chlorine addition rate was 1.0 mol%.

Next, while the porous silica glass body P, which was preheated to about 950°C and had chlorine added, was still in the core tube 10, helium gas was introduced from the gas introduction part 40. As a result, the porous silica glass body P was in an atmosphere of 100% helium in the core tube 10. In this state, microwaves generated by the microwave generator 31 were introduced into the resonator 33, and the porous silica glass body P was heated by the resonant heating mechanism 30. The maximum output of the microwaves in the resonant heating mechanism 30 was 10 kW, and the frequency band of the introduced microwaves was 2.45 GHz. When the microwaves were introduced, the resonant heating mechanism 30 monitored the surface temperature of the porous silica glass body P and adjusted the output of the introduced microwaves to achieve a predetermined surface temperature. When the surface temperature of the porous silica glass body P reached 1450°C, the porous silica glass body P was moved (lowered) at a speed of 10 mm/min within the resonator 33. This microwave heating by the resonant heating mechanism 30 made the porous silica glass body P transparent glass. The microwave output at this time was in the range of 4 kW to 5 kW.

The chlorine concentration in the silica glass obtained by the above-described Experimental Example 1 was 0.8 mol%. This silica glass was made transparent glass throughout its entire length by the above-described manufacturing method. When producing the same glass body by a resistance heating method without using microwave heating, a resistance heating output of 22 kW to 24 kW is required. In contrast, according to the manufacturing method of the present example, the required energy was 1/4 to 1/6 of the conventional heating output. Thus, it was confirmed that the manufacturing method of the present experimental example can improve energy efficiency by performing microwave heating even if the preheating temperature is lowered.

[Experimental Example 2]

As Experimental Example 2, first, as shown in the above-described step (a), a porous silica glass body made of silica glass and 5 mol% $GeO_2$ was produced by the VAD method. The produced porous silica glass body had an outer diameter of 140 mm and a relative density of 0.12 compared to transparent glass.

Next, the heating apparatus 1 shown in FIG. 1 was prepared, and the produced porous silica glass body was accommodated in the core tube 10 as shown in the above-described step (b). Then, the resistance heating heater 20 was heated to preheat the porous silica glass body to 950°C. During this preheating, a gas containing 5 vol% $Cl_2$ mixed in a nitrogen atmosphere was introduced from the gas introduction part 40, and chlorine was added to the entire porous silica glass body P. The chlorine addition rate was 0.2 mol%.

Next, while the porous silica glass body P, which was preheated to about 950°C and had chlorine added, was still in the core tube 10, helium gas was introduced from the gas introduction part 40. As a result, the porous silica glass body P was in an atmosphere of 100% helium in the core tube 10. In this state, microwaves generated by the microwave generator 31 were introduced into the resonator 33, and the porous silica glass body P was heated by the resonant heating mechanism 30. The maximum output of the microwaves in the resonant heating mechanism 30 was 10 kW, and the frequency band of the introduced microwaves was 2.45 GHz. When the microwaves were introduced, the resonant heating mechanism 30 monitored the surface temperature of the porous silica glass body P and adjusted the output of the introduced microwaves to achieve a predetermined surface temperature. When the surface temperature of the porous silica glass body P reached 1450°C, the porous silica glass body P was moved (lowered) at a speed of 10 mm/min within the resonator 33. This microwave heating by the resonant heating mechanism 30 made the porous silica glass body P transparent glass. The microwave output at this time was in the range of 3 kW to 4 kW.

The chlorine concentration in the silica glass obtained by the above-described Experimental Example 2 was 0.6 mol%. This silica glass was made transparent glass throughout its entire length by the above-described manufacturing method. When producing the same glass body by a resistance heating method without using microwave heating, a resistance heating output of 22 kW to 24 kW is required. In contrast, according to the manufacturing method of the present example, the required energy was 1/5 to 1/8 of the conventional heating output. Thus, it was confirmed that the manufacturing method of the present experimental example can improve energy efficiency by performing microwave heating even if the preheating temperature is lowered.

[Experimental Example 3]

As Experimental Example 3, first, as shown in the above-described step (a), a porous silica glass body made of silica glass was produced by the VAD method. The produced porous silica glass body had an outer diameter of 180 mm and a relative density of 0.15 compared to transparent glass.

Next, the heating apparatus 1 shown in FIG. 1 was prepared, and the produced porous silica glass body was accommodated in the core tube 10 as shown in the above-described step (b). Then, the resistance heating heater 20 was heated to preheat the porous silica glass body to 950°C. During this preheating, a gas containing 10 vol% $SiF_4$ mixed in a nitrogen atmosphere was introduced from the gas introduction part 40, and fluorine was added to the entire porous silica glass body P. The fluorine addition rate was 1.0 mol%.

Next, while the porous silica glass body P, which was preheated to about 950°C and had fluorine added, was still in the core tube 10, nitrogen gas and 5 vol% SiF$_4$ were introduced from the gas introduction part 40. As a result, the porous silica glass body P was in an atmosphere of nitrogen and SiF$_4$ mixed gas in the core tube 10. In this state, microwaves generated by the microwave generator 31 were introduced into the resonator 33, and the porous silica glass body P was heated by the resonant heating mechanism 30. The maximum output of the microwaves in the resonant heating mechanism 30 was 10 kW, and the frequency band of the introduced microwaves was 2.45 GHz. When the microwaves were introduced, the resonant heating mechanism 30 monitored the surface temperature of the porous silica glass body P and adjusted the output of the introduced microwaves to achieve a predetermined surface temperature. When the surface temperature of the porous silica glass body P reached 1250°C, the porous silica glass body P was moved (lowered) at a speed of 5 mm/min within the resonator 33. This microwave heating by the resonant heating mechanism 30 further added fluorine to the porous silica glass body P. The microwave output at this time was in the range of 2 kW to 3 kW.

Furthermore, while the porous silica glass body P, which was preheated to about 950°C and had fluorine added, was still in the core tube 10, helium gas and 5 vol% SiF$_4$ were introduced from the gas introduction part 40. As a result, the porous silica glass body P was in an atmosphere of helium and SiF$_4$ in the core tube 10. In this state, microwaves generated by the microwave generator 31 were introduced into the resonator 33, and the porous silica glass body P was heated by the resonant heating mechanism 30. The maximum output of the microwaves in the resonant heating mechanism 30 was 10 kW, and the frequency band of the introduced microwaves was 2.45 GHz. When the microwaves were introduced, the resonant heating mechanism 30 monitored the surface temperature of the porous silica glass body P and adjusted the output of the introduced microwaves to achieve a predetermined surface temperature. When the surface temperature of the porous silica glass body P reached 1400°C, the porous silica glass body P was moved (lowered) at a speed of 10 mm/min within the resonator 33. This microwave heating by the resonant heating mechanism 30 made the porous silica glass body P transparent glass. The microwave output at this time was in the range of 3 kW to 4 kW.

The fluorine concentration in the silica glass obtained by the above-described Experimental Example 3 was 1.2 mol%. This silica glass was made transparent glass throughout its entire length by the above-described manufacturing method. When producing the same glass body by a resistance heating method without using microwave heating, a resistance heating output of 16 kW to 20 kW is required. In contrast, according to the manufacturing method of the present example, the required energy was 1/4 to 1/6 of the conventional heating output. Thus, it was confirmed that the manufacturing method of the present experimental example can improve energy efficiency by performing microwave heating even if the preheating temperature is lowered.

**Reference Signs List**

| | |
|---|---|
| 1, 1A | Heating apparatus |
| 10 | Core tube |
| 11 | Seed rod |
| 20 | Resistance heating heater |
| 20A | Infrared heater |
| 30 | Resonant heating mechanism |
| 31 | Microwave generator |
| 32 | Waveguide |
| 33 | Resonator |
| 40 | Gas introduction part |
| 50 | Test device |
| 51 | Microwave oscillator |
| 52 | Waveguide |
| 53 | Resonator |
| 54 | Output monitor |
| G | Glass |
| P | Porous silica glass body |

**Claims**

1. A method for manufacturing a silica glass body, comprising:

preheating a porous silica glass body; and
placing the preheated porous silica glass body in a resonator that resonates a microwave having a frequency band of 1 GHz to 30 GHz to heat the porous silica glass body with the microwave,

wherein at least a part of the porous silica glass body contains an additive other than silicon and oxygen,
wherein the porous silica glass body is preheated to a temperature equal to or higher than a glass transition temperature of the additive-added portion of the porous silica glass body in the preheating, and
wherein the porous silica glass with the additive is heated with the microwave in the heating with the microwave.

2. The method for manufacturing a silica glass body according to claim 1, wherein the additive is a halogen element.

3. The method for manufacturing a silica glass body according to claim 2, wherein the halogen element is added to the porous silica glass body as the additive in the preheating.

4. The method for manufacturing a silica glass body according to claim 2, wherein the halogen element is added to the porous silica glass body as the additive by supplying a halogen compound gas into a core tube including the resonator in the preheating and the heating with the microwave.

5. The method for manufacturing a silica glass body according to claim 1, wherein the additive is an oxide of an element selected from the group consisting of germanium, aluminum, boron, phosphorus, and titanium.

6. The method for manufacturing a silica glass body according to claim 1, wherein an oxide of an element selected from the group consisting of germanium, aluminum, boron, phosphorus, and titanium, and a halogen element are added to the porous silica glass body as the additive in the preheating.

7. The method for manufacturing a silica glass body according to claim 1, wherein the additive is at least one alkali element selected from alkali metals and alkaline earth metals.

8. The method for manufacturing a silica glass body according to claim 1, wherein at least one halogen element and at least one alkali element selected from alkali metals and alkaline earth metals are added to the porous silica glass body as the additive in the preheating.

9. The method for manufacturing a silica glass body according to any one of claims 1 to 8, wherein the glass transition temperature is 700°C or higher and less than 1100°C.

10. The method for manufacturing a silica glass body according to any one of claims 1 to 8, further comprising adding the additive to the porous silica glass body before the preheating.

11. A heating apparatus used in the method for manufacturing a silica glass body according to any one of claims 1 to 8, the heating apparatus comprising:

   a core tube capable of accommodating the porous silica glass body therein;
   a preheating mechanism configured to preheat the porous silica glass body; and
   a resonant heating mechanism configured to heat the porous silica glass body preheated by the preheating mechanism, by resonating a microwave.

12. The heating apparatus according to claim 11, further comprising a gas introduction part capable of introducing gas including the additive into the core tube.

13. The heating apparatus according to claim 11,
   wherein the preheating mechanism and the resonant heating mechanism are sequentially arranged along the direction in which the porous silica glass body moves in the core tube.

14. The heating apparatus according to claim 11,
   wherein the preheating mechanism is configured to heat the porous silica glass body to a temperature of 700°C or higher and less than 1100°C.

Fig.1

**Fig.2**

## Fig.3

G

50

53

52

51

MICROWAVE
OSCILLATOR

54

OUTPUT MONITOR

# Fig.4

## Fig.5

EP 4 603 462 A1

# Fig.6

# Fig.7

## INTERNATIONAL SEARCH REPORT

International application No.

**PCT/JP2023/036784**

| A. | CLASSIFICATION OF SUBJECT MATTER |
|---|---|

*C03B 20/00*(2006.01)i; *C03B 8/04*(2006.01)i; *H05B 6/80*(2006.01)i
FI:     C03B20/00 E; C03B8/04 L; C03B8/04 P; H05B6/80 Z

According to International Patent Classification (IPC) or to both national classification and IPC

| B. | FIELDS SEARCHED |
|---|---|

Minimum documentation searched (classification system followed by classification symbols)

C03B20/00; C03B8/04; C03B19/14; C03B37/012-37/018

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT | |
|---|---|---|

| Category* | Citation of document, with indication, where appropriate, of the relevant passages | Relevant to claim No. |
|---|---|---|
| X | JP 2005-53740 A (FUJIKURA LTD.) 03 March 2005 (2005-03-03) claims, paragraphs [0027]-[0029], [0036], [0044]-[0051] | 1-3, 9-10 |
| A | | 4-8, 11-14 |
| A | JP 63-69730 A (AMERICAN TELEPHONE AND TELEGRAPH CO.) 29 March 1988 (1988-03-29) p. 4, lower left column, line 12 to lower right column, line 2, p. 5, upper right column, line 13 to p. 6, upper right column, line 14, fig. 1, 6 | 1-14 |
| A | JP 62-123036 A (NIPPON TELEGRAPH AND TELEPHONE CORP.) 04 June 1987 (1987-06-04) claims, examples, drawings | 1-14 |
| A | JP 2004-210548 A (FUJIKURA LTD.) 29 July 2004 (2004-07-29) claims, examples | 1-14 |
| A | CN 104817264 A (JIANGSU HENGTONG PHOTOELECTRIC STOCK CO., LTD.) 05 August 2015 (2015-08-05) claims, example 4 | 1-14 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **21 December 2023** | **09 January 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT
### Information on patent family members

International application No.

**PCT/JP2023/036784**

| Patent document cited in search report | | | Publication date (day/month/year) | Patent family member(s) | Publication date (day/month/year) |
|---|---|---|---|---|---|
| JP | 2005-53740 | A | 03 March 2005 | (Family: none) | |
| JP | 63-69730 | A | 29 March 1988 | EP 257587 A1 column 5, lines 5-17, column 6, line 19 to column 8, line 4, fig. 1, 6<br>US 4941905 A<br>CN 87105870 A | |
| JP | 62-123036 | A | 04 June 1987 | (Family: none) | |
| JP | 2004-210548 | A | 29 July 2004 | (Family: none) | |
| CN | 104817264 | A | 05 August 2015 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2022163737 A
- JP S61063535 A
- JP S62113732 A
- JP H01183432 A
- JP H01183436 A
- JP H04114926 A
- JP 2004043224 A
- JP H01183435 A
- JP 2005145735 A

### Non-patent literature cited in the description

- **YNGVE HASSLER et al.** A Homogeneous Heating Technique in Preform Manufacturing. *Journal of Lightwave Technology*, 1986, vol. 4 (10), 1567-1570
- **Y. HASSLER** ; **L. JOHANSEN**. MICROWAVE HEATING OF FUSED QUARTZ TO HIGH TEMPERATURES IN THE FABRICATION PROCESS OF OPTICAL FIBERS. *Material Research Soc. Symp. Proc.*, 1988, vol. 124, 273-278